# EUROPEAN PATENT APPLICATION

(11) **EP 4 769 960 A1**
(43) Date of publication of application: **01.07.2026**
(21) Application number: 25223229.3
(22) Date of filing: 15.12.2025
(51) Int. Cl.: H04B 3/54, H02J 3/38

(54) **SELF-NETWORKING METHOD FOR MODULE CONTROLLER, AND POWER CONVERTER**

(30) Priority: 31.12.2024 CN 202411997709
(71) Applicant: Sungrow (Shanghai) Co., Ltd., Shanghai 201107 (CN)
(72) Inventor: YANG, Hui, Shanghai (CN); YAO, Keliang, Shanghai (CN); ZHANG, Gan, Shanghai (CN); HE, Yi, Shanghai (CN); CHEN, Shangwen, Shanghai (CN)
(74) Representative: Zacco Norway AS

(57) **Abstract**

The present disclosure relates to the technical field of renewable energy, and provides a self-networking method for a module controller, and a related apparatus, to improve the self-networking efficiency for the module controller. The method includes: controlling a power converter to search for multiple initial module controllers; determining multiple candidate module controllers from the multiple initial module controllers, where the multiple candidate module controllers are obtained by filtering the multiple initial module controllers based on a communication link quality between the power converter and each of the multiple initial module controllers and a minimum quality requirement threshold; and networking the multiple candidate module controllers to obtain multiple networked module controllers.

## Description

### FIELD

The present disclosure relates to the technical field of renewable energy, and in particular to a self-networking method for a module controller, and a power converter.

### BACKGROUND

As global reliance on renewable energy gradually increases, a renewable energy power station, as an important component of clean energy, is becoming increasingly prominent in power supply systems. To better control the renewable energy power station (such as a photovoltaic power station), a power converter and a module controller are typically used to manage a power generation component. The power converter determines a position of each module controller to facilitate command control and status positioning for each module controller during later operations. Therefore, the module controller is to be networked.

During a networking process, an entire logical topology is determined by using an automation software identification strategy in the conventional solutions, and a temporary network is established between the power converter and the module controller, resulting in low networking efficiency.

### SUMMARY

A self-networking method for a module controller, and a power converter are provided according to the present disclosure.

In a first aspect, a self-networking method for a module controller is provided according to an embodiment of the present disclosure. The self-networking method includes: controlling a power converter to search for multiple initial module controllers; determining multiple candidate module controllers from the multiple initial module controllers, where the multiple candidate module controllers are obtained by filtering the multiple initial module controllers based on a communication link quality between the power converter and each of the multiple initial module controllers and a minimum quality requirement threshold; and networking the multiple candidate module controllers to obtain multiple networked module controllers.

In a second aspect, a power converter is provided according to an embodiment of the present disclosure. The power converter includes a memory, a controller, and a direct current conversion unit. The direct current conversion unit is configured to convert a direct current power into an alternating current power. The memory is configured to store an instruction. The memory and the controller are connected to each other via lines. The controller is configured to: search for multiple initial module controllers; determine multiple candidate module controllers from the multiple initial module controllers, where the multiple candidate module controllers are obtained by filtering the multiple initial module controllers based on a communication link quality between the power converter and each of the multiple initial module controllers and a minimum quality requirement threshold; and network the multiple candidate module controllers to obtain multiple networked module controllers.

In the technical solutions according to the embodiments of the present disclosure, a power converter is controlled to search for multiple initial module controllers; multiple candidate module controllers are determined from the multiple initial module controllers, where the multiple candidate module controllers are obtained by filtering the multiple initial module controllers based on a communication link quality between the power converter and each of the multiple initial module controllers and a minimum quality requirement threshold; and the multiple candidate module controllers are networked to obtain multiple networked module controllers. According to the embodiments of the present disclosure, during the self-networking process, a temporary network is not established for the module controllers, reducing the usage of unicast communication and improving the self-networking efficiency for the module controllers.

### BRIEF DESCRIPTION OF THE DRAWINGS

FIG. 1 is a schematic flowchart showing a self-networking method for a module controller according to an embodiment of the present disclosure;
FIG. 2 is a schematic diagram showing composition of a photovoltaic power generation system according to an embodiment of the present disclosure;
FIG. 3 is a schematic diagram showing composition of a photovoltaic string according to an embodiment of the present disclosure;
FIG. 4 is a schematic flowchart showing a self-networking method for a module controller according to another embodiment of the present disclosure;
FIG. 5 is a schematic flowchart showing a self-networking method for a module controller according to another embodiment of the present disclosure;
FIG. 6 is a schematic flowchart showing a self-networking method for a module controller according to another embodiment of the present disclosure;
FIG. 7A is a schematic flowchart showing a self-networking method for a module controller according to another embodiment of the present disclosure;
FIG. 7B is a schematic diagram showing a connection of a module controller according to an embodiment of the present disclosure;
FIG. 7C is a schematic diagram showing a connection of multiple module controllers according to an embodiment of the present disclosure;
FIG. 8 is a schematic diagram of a self-networking apparatus for a module controller according to an embodiment of the present disclosure; and
FIG. 9 is a schematic diagram of a power converter according to an embodiment of the present disclosure.

### DETAILED DESCRIPTION

A self-networking method and apparatus for a module controller, a power converter, a power system, and a storage medium are provided according to the present disclosure, to solve the problem of establishing a temporary network during the self-networking process for the module controller, and to improve the self-networking efficiency for the module controller.

The terms such as "first", "second", "third", "fourth" and the like (if any) in the description, claims and drawings are only used to distinguish similar objects from each other, rather than describe a particular or chronological order. It should be understood that data used in such manner may be interchanged appropriately, so that the embodiments of the present disclosure may be, for example, implemented in an order other than those illustrated or described herein. Moreover, the terms "include," "comprise", and any other variants thereof are intended to cover the non-exclusive inclusion. For example, a process, a method, a system, a product, or a device that includes a list of steps or units is not necessarily limited to those expressly listed steps or units, but may include other steps or units not expressly listed or inherent in such process, method, product, or device.

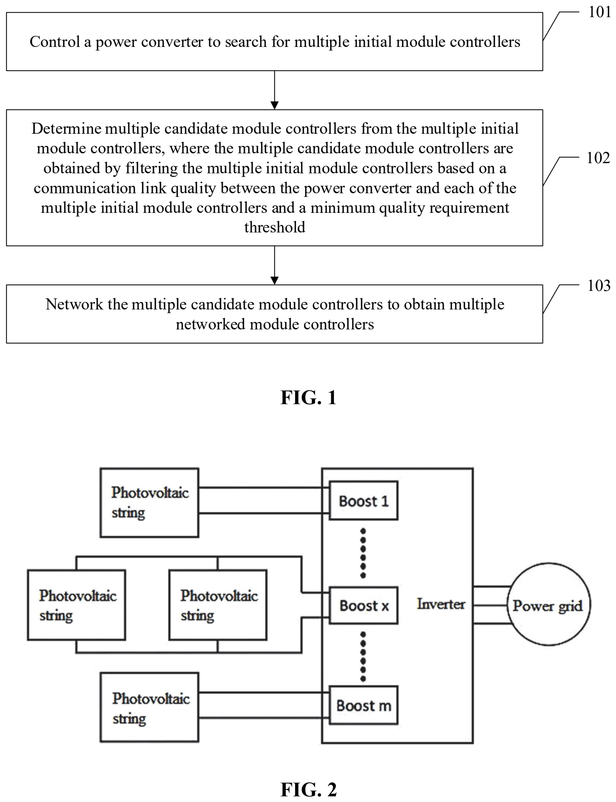

Referring to FIG. 1, FIG. 1 is a flowchart of a self-networking method for a module controller according to an embodiment of the present disclosure, including the following steps 101 to 103.

In 101, a power converter is controlled to search for multiple initial module controllers.

The present disclosure is applicable to the technical field of renewable energy. For ease of understanding, a photovoltaic scenario is taken as an example to describe in the embodiments of the present disclosure and subsequent embodiments.

The initial module controller is a control apparatus connected to a photovoltaic module, configured to control the photovoltaic module, and to achieve power regulation, communication, and safety protection functions for the photovoltaic module.

In an embodiment, the power converter, after being powered on, broadcasts a search command at a preset time interval, and each qualified initial module controller reports a broadcast response message based on the search command in a competition manner through a Carrier Sense Multiple Access with Collision Avoid (CSMA/CA) mechanism. The broadcast response message carries an identification for a module controller and a PLC link quality value between the module controller and the power converter. Power Line Carrier (PLC) is a telecommunications transmission manner that uses high-voltage power lines in a power system for communication. PLC communication includes: transmitting a signal into a transmitting branch of the PLC, modulating the signal into a high-frequency signal of 80kHz-490kHz, transmitting the high-frequency signal into one or two phases of a high-voltage power line through a coupling device, transmitting the high-frequency signal through lines to a receiving end, then transmitting the high-frequency signal to a receiving branch of a PLC device through a coupling device of the receiving end, and demodulating the high-frequency signal back into the original signal. Using one phase is referred to as a "phase-to-ground" coupling wiring manner, while using two phases is referred to as a "phase-to-phase" coupling wiring manner. A channel quality from the power converter to the module controller is represented as a downlink PLC link quality value, and a channel quality from the module controller to the power converter is represented as an uplink PLC link quality value. The PLC link quality value reflects a communication link quality. A greater PLC link quality value indicates a better communication link quality. Moreover, communication links with actual physical connections have smaller channel attenuation, smaller channel noise and better link quality compared with communication links without actual physical connections. Therefore, use of the link quality value may determine an apparatus having an actual physical connection with a local apparatus. The power converter may be an inverter or another apparatus with a power conversion function, which is not limited here.

In 102, multiple candidate module controllers are determined from the multiple initial module controllers, where the multiple candidate module controllers are obtained by filtering the multiple initial module controllers based on a communication link quality between the power converter and each of the multiple initial module controllers and a minimum quality requirement threshold.

It should be noted that not all module controllers send broadcast response messages. The initial module controller or the power converter determines whether the detected uplink PLC link quality value or downlink PLC link quality value is greater than or equal to a PLC link quality minimum threshold carried in the search command. The initial module controller whose the uplink PLC link quality value or downlink PLC link quality value between the initial module controller and the power converter is greater than or equal to the PLC link quality minimum threshold is determined as a candidate module controller.

The execution subject according to the embodiments of the present disclosure may be a self-networking apparatus for a module controller, a power converter, or another apparatus with processing capabilities. For ease of description, the power converter is taken as an example in the embodiments of the present disclosure and subsequent embodiments.

It is understandable that in the embodiments of the present disclosure and subsequent embodiments, the applied photovoltaic power generation system is provided with the module controller, and the module controller may be an optimizer or a shutdown device. For ease of description, the optimizer is taken as an example in the embodiments of the present disclosure and subsequent embodiments.

For example, as shown in FIG. 2, the photovoltaic power generation system includes multiple photovoltaic strings and one power converter. The power converter is connected to the power grid. The power converter is connected to an applicable single-phase power grid or three-phase power grid, depending on a model of the power converter. The power converter internally includes m Boost converters, where m is a positive integer greater than or equal to 1. Each Boost converter has an input port, which is a Boost port, also known as a maximum power point tracking (MPPT) port. Each Boost port may include multiple photovoltaic string ports (referred to as PV ports) connected in parallel within the power converter, or the Boost port may directly serve as one PV port, that is, each PV port may be connected to one photovoltaic string or two photovoltaic strings connected in parallel through a combiner terminal.

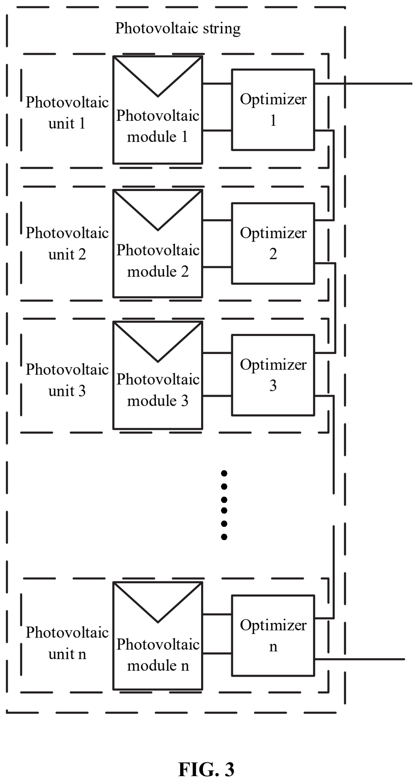

When the photovoltaic power generation system is fully provided with optimizers, each photovoltaic string includes n photovoltaic units, and each of the photovoltaic units includes a photovoltaic module and an optimizer. The photovoltaic unit includes at least one photovoltaic module connected to an input end of the optimizer. Output ends of all optimizers in the photovoltaic string are connected in series, that is, a positive output terminal of one optimizer is connected to a negative output terminal of a previous optimizer, and a negative output terminal of the optimizer is connected to a positive output terminal of a next optimizer, and the all optimizers connected in series are connected to a PV port of the power converter. Detailed connection of each photovoltaic string is shown in FIG. 3. The value of n depends on the model of the power converter. For example, when the power converter is a single-phase power converter, n is set to be less than or equal to 25; and when the power converter is a three-phase power converter, n is less than or equal to 35.

It should also be noted that the number of photovoltaic units may be different in different photovoltaic strings connected to a same photovoltaic power generation system, the series-parallel configuration may be different for photovoltaic strings connected to different Boost ports, and the power may be different for photovoltaic units.

In 103, the multiple candidate module controllers are networked to obtain multiple networked module controllers.

There are various ways to perform networking, such as using an operating frequency band for networking, or performing a pulling short-circuit operation or an IV scanning operation for networking. Before the pulling short-circuit operation or IV scanning operation, a voltage limiting operation may be performed to enhance safety and prevent the voltage from exceeding a safe range.

According to the embodiments of the present disclosure, during the self-networking process, a temporary network is not established for the candidate module controllers, reducing the usage of unicast communication and improving the self-networking efficiency for the module controllers.

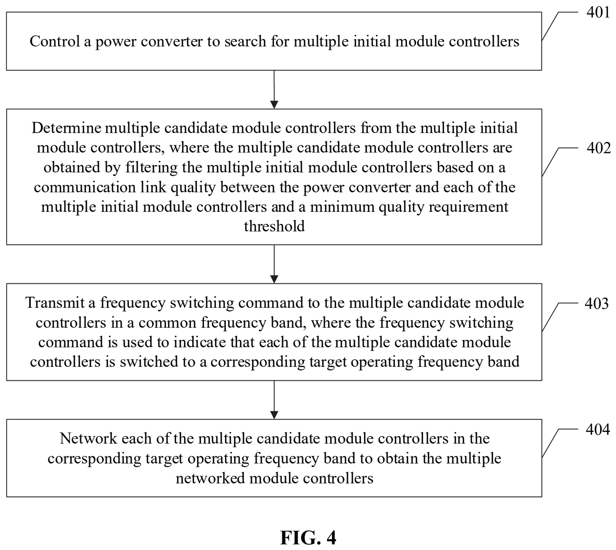

Referring to FIG. 4, FIG. 4 is a flowchart of a self-networking method for a module controller according to another embodiment of the present disclosure, including the following steps 401 to 404.

In 401, a power converter is controlled to search for multiple initial module controllers.

It should be noted that during controlling the power converter to broadcast a search command, the search command may carry a PLC link quality detection command and a PLC link quality minimum threshold.

In an embodiment, each time the power converter broadcasts a search command, the search command carries a query sequence number (seq_num), a reporting time limit (maxseq_time), and an identification code list (conf_list) for the previous search. The module controller logically determines whether to report its own information based on the three types of information (seq_num, maxseq_time, and conf_list). The identification code list is empty in the search command for the first search.

In 402, multiple candidate module controllers are determined from the multiple initial module controllers, where the multiple candidate module controllers are obtained by filtering the multiple initial module controllers based on a communication link quality between the power converter and each of the multiple initial module controllers and a minimum quality requirement threshold.

It should be noted that not all module controller feeds back broadcast response messages. On receipt of a search command (discovery_command), each module controller determines whether to respond and whether the received downlink PLC link quality value is greater than or equal to the PLC link quality minimum threshold, filters out the search command and makes no response if the received downlink PLC link quality value is less than the PLC link quality minimum threshold, and feeds back the broadcast response message if the received downlink PLC link quality value is greater than or equal to the PLC link quality minimum threshold. Then, the initial module controller starts the CSMA/CA mechanism to report the broadcast response message (response_data) in a competition manner and starts timing. The broadcast response message carries a generated initial identification code (iden_code) and the PLC link quality value. The initial identification code is used to identify a site of the module controller, and the PLC link quality value is used to reflect the link quality between the module controller and the power converter. If it is found that the timer reaches maxseq_time and the module controller has unsuccessfully reported due to unsuccessful competition, the module controller stops reporting and waits for receiving a next search command to report again.

In an embodiment, the search command includes a PLC link quality detection command, and the power converter may filter all initial module controllers feeding back broadcast response messages to obtain multiple candidate module controllers.

In an embodiment, the determining multiple candidate module controllers from the multiple initial module controllers may include: receiving, by the power converter, broadcast response messages fed back by the multiple initial module controllers to obtain multiple uplink PLC link quality values, where the uplink PLC link quality value refers to the PLC link quality value from the module controllers to the power converter; and determining initial module controllers, among the multiple initial module controllers, whose uplink PLC link quality values each are greater than or equal to a PLC link quality minimum threshold as the multiple candidate module controllers.

It is understandable that the candidate module controller is used to indicate an initial module controller having an actual physical connection with the power converter.

It should be noted that the power converter compares the obtained multiple uplink PLC link quality values with the minimum quality requirement threshold, and determines the initial module controllers corresponding to uplink PLC link quality values greater than or equal to the minimum quality requirement threshold as candidate module controllers. The uplink PLC link quality value reflects PLC communication quality between each module controller and the power converter. The module controller and the power converter each are configured with corresponding algorithms to calculate the uplink PLC communication quality.

The module controller and the power converter may directly measure a strength of a carrier signal on the PLC and display the strength in a specific unit (such as dBm, dB µ V and the like). When the module controller has an actual physical connection with the power converter, the PLC link quality value between them is greater, for example, 70dBm. When the module controller has no actual physical connection with the power converter, they rely only on energy space coupling, and the PLC link quality value between them is lower, for example, 45dBm. The minimum quality requirement threshold may be set to 50dBm.

In an embodiment, the search command includes a PLC link quality detection command and a PLC link quality minimum threshold, and the module controllers may determine by themselves whether to respond by comparing the detected downlink PLC link quality value with the PLC link quality minimum threshold. The module controllers whose downlink PLC link quality values are greater than or equal to the PLC link quality minimum threshold feed broadcast response messages back to the power converter.

In an embodiment, the determining multiple candidate module controllers from the multiple initial module controllers may include: receiving, by the power converter, broadcast response messages fed back by multiple candidate module controllers to obtain the multiple candidate module controllers and multiple uplink PLC link quality values, where the uplink PLC link quality value refers to the PLC link quality value from the module controllers to the power converter, the candidate module controllers refer to initial module controllers, among the multiple initial module controllers, whose detected downlink PLC link quality values each are greater than or equal to the PLC link quality minimum threshold, and the downlink PLC link quality value refers to the PLC link quality value from the power converter to the module controllers.

It should be noted that each of the initial module controllers determines whether the detected downlink PLC link quality value is greater than or equal to the PLC link quality minimum threshold carried in the search command, and feeds back the broadcast response message if the downlink PLC link quality value is greater than or equal to the PLC link quality minimum threshold, filters out the search command and makes no response if the downlink PLC link quality value is less than the PLC link quality minimum threshold.

In an embodiment, the search command includes a PLC link quality detection command and a PLC link quality minimum threshold, and the module controllers may determine by themselves whether to respond by comparing detected downlink PLC link quality values with the PLC link quality minimum threshold. The module controllers whose downlink PLC link quality values are greater than or equal to the PLC link quality minimum threshold are determined as filtered module controllers. The filtered module controllers feed broadcast response messages back to the power converter. The power converter determines whether the uplink PLC link quality values are greater than or equal to the PLC link quality minimum threshold, and determines the candidate module controllers from the filtered module controllers.

In an embodiment, the determining multiple candidate module controllers from the multiple initial module controllers may include: receiving, by the power converter, broadcast response messages fed back by multiple filtered module controllers, to obtain the multiple filtered module controllers and multiple uplink PLC link quality values, where the multiple filtered module controllers refer to initial module controllers, among the multiple initial module controllers, whose detected downlink PLC link quality values each are greater than or equal to the PLC link quality minimum threshold, the uplink PLC link quality value refers to the PLC link quality value from the module controller to the power converter, and the downlink PLC link quality value refers to the PLC link quality value from the power converter to the module controller; and determining filtered module controllers, among the multiple filtered module controllers, whose uplink PLC link quality values each are greater than or equal to the PLC link quality minimum threshold as the multiple candidate module controllers.

In the embodiment of the present disclosure and subsequent embodiments, the uplink PLC link quality values obtained by the power converter are in terms of the module controllers that have successfully reported. For other module controllers that have unsuccessfully reported, they may report in a next round of search command in a completion manner through the CSMA/CA mechanism.

For example, after completing a first round of search command, the power converter, based on the information reported by the initial module controllers, keeps the query sequence number unchanged, repackages and sends the search command (discovery_command), carrying the identification code list (code_list) composed of the initial identification codes (iden_code) of all module controllers that have successfully reported in the previous round. The process gradually converges, ultimately achieving a balance between search time and efficiency, thereby solving the problem of incomplete search and long search time for the power converter.

It is understandable that when there are multiple power converters, each of the power converters broadcasts the search command in respective operating frequency bands.

In 403, a frequency switching command is transmitted to the multiple candidate module controllers in a common frequency band, where the frequency switching command is used to indicate that each of the multiple candidate module controllers is switched to a corresponding target operating frequency band.

When the power converter is in a quantity of 1, the multiple candidate module controllers may be configured with one target operating frequency band, and the value of the target operating frequency band may be set according to actual conditions. When the power converter is in a quantity of 2 or more, the candidate module controllers corresponding to each of the power converters may be configured with a target operating frequency band corresponding to the power converter, and the multiple power converters correspond to different target operating frequency bands. That is, the frequency switching command including a single target operating frequency is sent to multiple candidate module controllers belonging to a single power converter.

It is understandable that the operation of setting different operating frequencies for multiple power converters may be recorded, and different frequency bands or frequency points may be allocated to the multiple power converters based on a record result, which is not limited here.

In 404, each of the multiple candidate module controllers is networked in the corresponding target operating frequency band to obtain the multiple networked module controllers.

The candidate module controllers belonging to the same power converter correspond to the same target operating frequency band. Different power converters correspond to different target operating frequency bands. Self-networking may be simultaneously performed on multiple power converters in different target operating frequency bands, avoiding mutual interference of the multiple power converters during the self-networking process.

According to the embodiment of the present disclosure, multiple candidate module controllers belonging to the same power converter are configured with the same target operating frequency band, and self-networking is performed on the candidate module controllers in the target operating frequency band, avoiding interference between multiple power converters, and improving the self-networking efficiency for the module controllers.

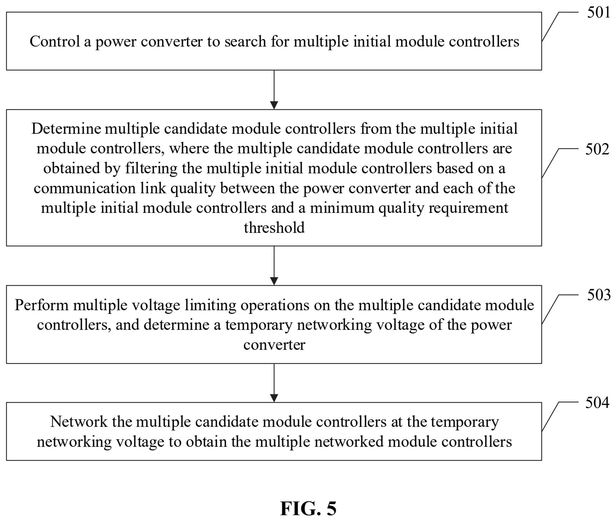

Referring to FIG. 5, FIG. 5 is a flowchart of a self-networking method for a module controller according to another embodiment of the present disclosure, including the following steps 501 to 504.

In 501, a power converter is controlled to search for multiple initial module controllers.

In 502, multiple candidate module controllers are determined from the multiple initial module controllers, where the multiple candidate module controllers are obtained by filtering the multiple initial module controllers based on a communication link quality between the power converter and each of the multiple initial module controllers and a minimum quality requirement threshold.

Steps 501 to 502 are similar to steps 401 to 402, and details are not repeated here.

In 503, multiple voltage limiting operations are performed on the multiple candidate module controllers, and a temporary networking voltage of the power converter is determined.

In an embodiment, the power converter is controlled to broadcast a first voltage limiting command and voltage data of the power converter is acquired for the first time as first-round voltage data, where the first voltage limiting command indicates that operating voltages of the candidate module controllers are set to a first voltage. The power converter is controlled to broadcast a second voltage limiting command and voltage data of the power converter is acquired for the second time as second-round voltage data, where the second voltage limiting command indicates that operating voltages of the candidate module controllers are set to a second voltage. The temporary networking voltage of the power converter is determined based on the first-round voltage data and the second-round voltage data.

For example, the power converter performs voltage limiting operations by broadcasting voltage limiting commands to each of the candidate module controllers. It is assumed that the first voltage is 0.5V, the voltages (maximum allowable output voltages) of all candidate module controllers are limited to 0.5V during a first voltage limiting operation, and the first-round voltage data of each of boost ports in the power converter is acquired, and recorded as V_0P5. It is assumed that the second voltage is 10V, the voltages of all candidate module controllers are limited to 10V during a second voltage limiting operation, and the second-round voltage data of each of boost ports in the power converter is acquired, and recorded as V_10. The first voltage and the second voltage may be set to other values, depending on actual conditions, which are not limited here.

It is understandable that when there are multiple power converters, the multiple power converters broadcast the voltage limiting commands in respective operating frequency bands.

In an embodiment, the determining the temporary networking voltage of the power converter based on the first-round voltage data and the second-round voltage data includes: determining a largest number of module controllers corresponding to a longest photovoltaic string in the power converter based on the first-round voltage data and the second-round voltage data, where the longest photovoltaic string refers to a photovoltaic string with a largest number of module controllers among photovoltaic strings connected to direct current/direct current (DC/DC) ports in the power converter; and determining the temporary networking voltage of the power converter based on the largest number of module controllers, the first-round voltage data, and the second-round voltage data. The DC/DC port may be a Boost port, or a buck port, which is not limited in the embodiments of the present disclosure.

For example, based on the first-round voltage data and the second-round voltage data of the power converter when voltages of the candidate module controllers are limited to 0.5V and 10V, respectively, a voltage difference between the first-round voltage data and the second-round voltage data is determined, and then the longest photovoltaic string in a current DC/DC port is calculated by dividing the voltage difference by a fixed operating voltage of each of the module controllers. The number of module controllers in the longest photovoltaic string is determined as the largest number of module controllers, recorded as PV_NUM_MAX. The temporary networking voltage of the power converter is determined based on the largest number of module controllers, the first-round voltage data, and the second-round voltage data.

In 504, multiple candidate module controllers are networked at the temporary networking voltage to obtain multiple networked module controllers.

The temporary networking voltage is used to protect the safe operation of the power converter, avoiding damage to the power converter during the self-networking process.

According to the embodiment of the present disclosure, the temporary networking voltage of the power converter is determined through multiple voltage limiting operations, and self-networking is performed on the multiple candidate module controllers at the temporary networking voltage, preventing the voltage exceeding the maximum safe operating voltage during the self-networking process, and improving the safety of module controllers during the self-networking process.

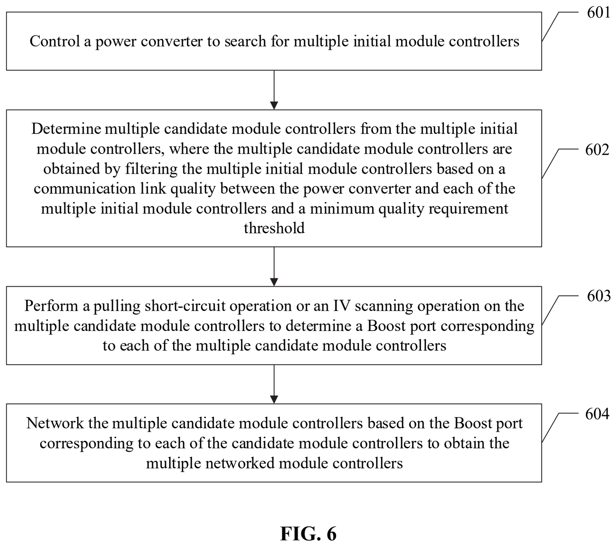

Referring to FIG. 6, FIG. 6 is a flowchart of a self-networking method for a module controller according to another embodiment of the present disclosure, including the following steps 601 to 604.

In 601, a power converter is controlled to search for multiple initial module controllers.

In 602, multiple candidate module controllers are determined from the multiple initial module controllers, where the multiple candidate module controllers are obtained by filtering the multiple initial module controllers based on a communication link quality between the power converter and each of the multiple initial module controllers and a minimum quality requirement threshold.

Steps 601 to 602 are similar to steps 401 to 402, and details are not repeated here.

In 603, a pulling short-circuit operation or an IV scanning operation is performed on the multiple candidate module controllers to determine a Boost port corresponding to each of the candidate module controllers.

In an embodiment, the power converter broadcasts a Boost disturbance strategy command, where the Boost disturbance strategy command is used to indicate a Boost index identifier to be disturbed at each disturbance moment in a disturbance moment sequence. A current of the power converter is limited to a first current, and a pulling short-circuit operation is performed on Boost ports one by one based on multiple Boost index identifiers in the disturbance moment sequence. A voltage change of each candidate module controller is determined, and the Boost port corresponding to the candidate module controller is determined based on the voltage change. The pulling short-circuit operation includes turning on a switching transistor in the Boost port.

Alternatively, an IV (current voltage disturbance) scanning operation is performed on the multiple candidate module controllers, and a Boost port corresponding to each of the candidate module controllers is determined based on a voltage change of the candidate module controller. Each Boost port corresponds to a Boost index identifier.

The Boost disturbance strategy command according to the embodiment of the present disclosure includes the Boost index identifiers to be disturbed at multiple disturbance moments, that is, the Boost index identifiers are broadcasted to each of the candidate module controllers at once, so that each candidate module controller monitors a current change or voltage change at each disturbance moment. In an embodiment, the Boost index identifiers are transmitted in batches, that is, each time a Boost index identifier corresponding to a disturbance moment is broadcasted. That is, the Boost index identifiers are broadcasted to each of the candidate module controllers in batches.

In 604, the candidate module controllers are networked based on the Boost port corresponding to each of the candidate module controllers to obtain the multiple networked module controllers.

It is understandable that after the self-networking of the multiple candidate module controllers, a preliminary logical topology is constructed and is to be improved. The candidate module controllers are in one-to-one correspondence with the Boost ports in the power converter, so as to obtain the detailed physical logical topology position information of multiple candidate module controllers actually connected to the power converter, to facilitate command control and status positioning during a later operation process, avoiding damage to the power converter caused by misjudgment of the power converter due to not knowing the physical logical topology position information of each of the module controllers under the influence of crosstalk.

According to the embodiment of the present disclosure, the Boost port corresponding to each of the candidate module controllers is determined by performing the pulling short-circuit operation or the IV scanning operation, and self-networking is performed based on the Boost port corresponding to each of the candidate module controllers. During the self-networking process, a temporary network is not established for the candidate module controllers, reducing the usage of unicast communication and improving the self-networking efficiency for the module controllers.

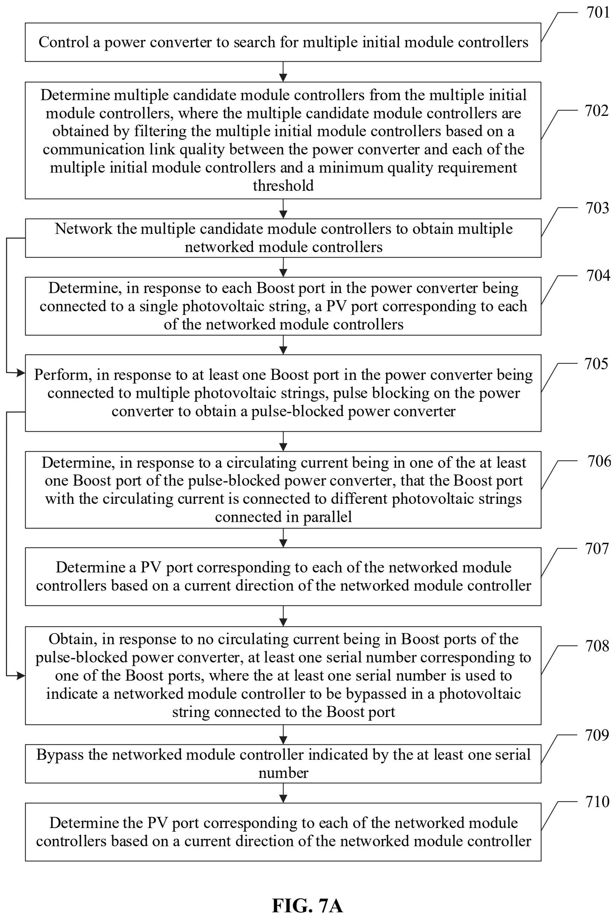

Referring to FIG. 7A, FIG. 7A is a flowchart of a self-networking method for a module controller according to another embodiment of the present disclosure, including the following steps 701 to 710.

In 701, a power converter is controlled to search for multiple initial module controllers.

In 702, multiple candidate module controllers are determined from the multiple initial module controllers, where the multiple candidate module controllers are obtained by filtering the multiple initial module controllers based on a communication link quality between the power converter and each of the multiple initial module controllers and a minimum quality requirement threshold.

Steps 701 to 702 are similar to steps 401 to 402, and details are not repeated here.

In 703, the multiple candidate module controllers are networked to obtain multiple networked module controllers.

Step 703 is similar to step 103, and details are not repeated here.

In 704, if each of the Boost ports in the power converter is connected to a single photovoltaic string, a PV port corresponding to each of the networked module controllers is determined.

It is understandable that if each of the Boost ports is connected to a single photovoltaic string, all networked module controllers in the single photovoltaic string correspond to the Boost port connected to the photovoltaic string. The photovoltaic string further includes photovoltaic units connected to the candidate module controllers, and each of the photovoltaic units includes at least one photovoltaic module.

In 705, if at least one of the Boost ports in the power converter is connected to multiple photovoltaic strings, pulse blocking is performed on the power converter to obtain a pulse-blocked power converter.

It is understandable that if one Boost port is connected to two photovoltaic strings, all networked module controllers in the two photovoltaic strings correspond to the Boost port connected to the two photovoltaic strings, but which PV port each networked module controller belongs to is not determined.

In 706, if a circulating current exists in one of the Boost ports of the pulse-blocked power converter, it is determined that the Boost port with the circulating current is connected to different photovoltaic strings connected in parallel.

It is understandable that after pulse blocking is performed on the power converter, the power converter does not operate. It is determined whether circulating current exists in all Boost ports of the pulse-blocked power converter. If the circulating current still exists in the power converter in such case, it indicates that the two photovoltaic strings connected to the Boost port have a voltage difference, that is, the number of operating networked module controllers is unbalanced.

It is understandable that if the circulating current exists in one of the Boost ports, it is determined that the Boost port with the circulating current is connected to different photovoltaic strings connected in parallel and the number of the networked module controllers is unbalanced.

In 707, a PV port corresponding to each networked module controller is determined based on a positive current or negative current of different photovoltaic strings connected in parallel.

Among the two photovoltaic strings connected to the Boost port with the circulating current, a PV port to which a networked module controller belongs may be determined by a current direction of the networked module controller. If current of a networked module controller flows into the Boost port, that is, the current is positive, it indicates that the networked module controller is in a photovoltaic string with a high voltage. If current of a networked module controller flows out of the Boost port, that is, the current is negative, it indicates that the networked module controller is in a photovoltaic string with a low voltage.

In 708, if no circulating current is in the Boost ports of the pulse-blocked power converter, at least one serial number corresponding to one of the Boost ports is obtained, where the at least one serial number indicates a networked module controller to be bypassed in a photovoltaic string connected to the Boost port.

It is understandable that if no circulating current is in all Boost ports of the pulse-blocked power converter, at least one serial number corresponding to one of the Boost ports is obtained, where the at least one serial number indicates the networked module controller to be bypassed in the photovoltaic string connected to the Boost port. At this time, the number of the module controllers in the two parallel photovoltaic strings connected to the Boost port is balanced, and bypassing is to be performed to change the balance.

In 709, the networked module controller corresponding to the at least one serial number is bypassed.

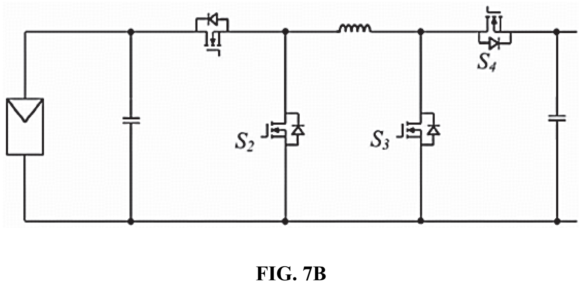

In an embodiment, the networked module controller indicated by the at least one serial number is determined as at least one to-be-bypassed module controller. An activation command is transmitted to an active bypass switching transistor in each to-be-bypassed module controller, to activate the to-be-bypassed module controller to achieve active bypass, thereby creating circulating current. As shown in FIG. 7B, S2 represents the active bypass switching transistor. On receipt of the activation command, S2 is turned on, the module controller is actively bypassed (short-circuited).

In an embodiment, after transmitting an activation command to the active bypass switching transistor in each to-be-bypassed module controller, the self-networking method further includes: determining, in response to an unactivated networked module controller being connected between two activated module controllers, that an active bypass switching transistor in the unactivated networked module controller is in a passive bypass state.

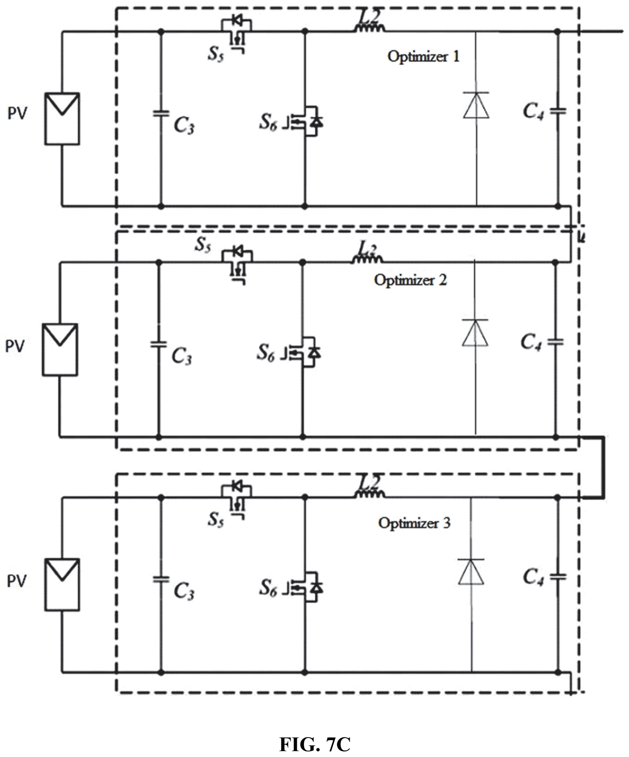

Bypassing includes active bypass and passive bypass. The active bypass refers to actively short-circuiting the networked module controller based on the serial number and the active bypass switching transistor. The passive bypass refers to a target module controller being passively bypassed (such as short-circuited through a diode) due to the activation of surrounding module controllers. As shown in FIG. 7C, the diode is a passive bypass switching transistor. On receipt of the activation command, the optimizer 1 and optimizer 3 are turned on, the diode of the optimizer 2 is passively turned on, and the optimizer 2 is passively bypassed (short-circuited).

In 710, the PV port corresponding to each networked module controller is determined based on a current direction of the networked module controller.

The PV port to which the networked module controller belongs may be determined by the current direction of the networked module controller. If current of a module controller flows into the Boost port, that is, the current is positive, it indicates that the module controller is in a photovoltaic string with a high voltage. If current of the module controller flows out of the Boost port, that is, the current is negative, it indicates that the module controller is in a photovoltaic string with a low voltage.

It is understood that, in addition to determining based on the current direction, step 710 may further be replaced with the following steps (1) and (2).

In step (1), a PV identification command is broadcasted by the power converter, where the PV identification command indicates a Boost index identifier in which the current is to be changed at each disturbance moment.

The PV identification command is broadcasted by the power converter, where the PV identification command indicates a Boost index identifier in which the current is to be changed at each disturbance moment, so that each of the module controllers knows the Boost index identifier in which the current is to be changed at each disturbance moment.

In step (2), the current of each of Boost ports is changed one by one based on the Boost index identifier, the change of the output current of each of the networked module controllers is determined, and the PV port corresponding to each of the networked module controllers is determined.

The current of each of Boost ports is changed one by one based on the Boost index identifier, the changes of the output current of each of the networked module controllers is determined, and the PV port corresponding to each of the networked module controllers is determined.

For example, when the networked module controller knows that a current of a Boost port 1 has changed, if the current of the networked module controller itself also changes, the photovoltaic string port, that is, the PV port to which the networked module controller belongs is determined based on the direction and the change of the current.

According to the embodiments of the present disclosure, PLC link quality values fed back by multiple initial module controllers are obtained by the power converter. The multiple initial module controllers are filtered based on the PLC link quality values and a minimum quality requirement threshold to obtain multiple candidate module controllers. The multiple candidate module controllers are networked to obtain multiple networked module controllers, and the PV ports corresponding to the networked module controllers are determined, thereby constructing an entire physical logical topology. During the self-networking process, a temporary network is not established for the target module controllers, reducing the usage of unicast communication and improving the self-networking efficiency for the module controllers.

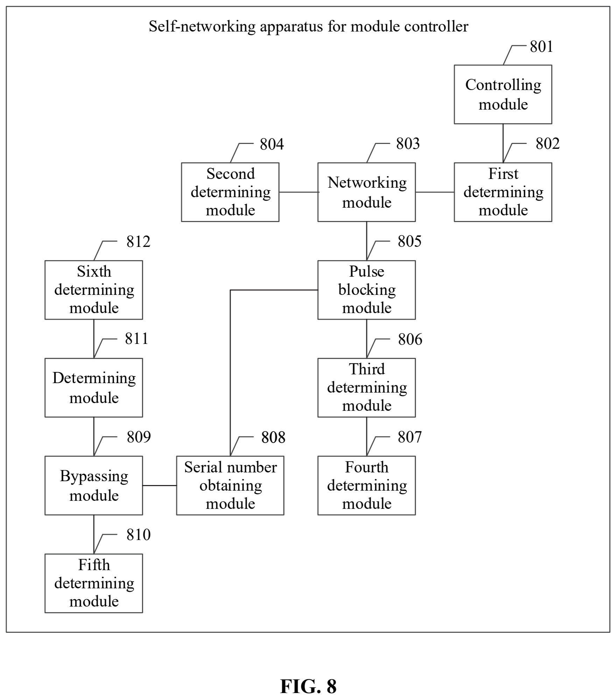

The self-networking method for a module controller according to the embodiments of the present disclosure is described above. A self-networking apparatus for a module controller according to the embodiments of the present disclosure is described below. Referring to FIG. 8, FIG. 8 is a schematic diagram of a self-networking apparatus for a module controller according to an embodiment of the present disclosure. The apparatus includes a controlling module 801, a first determining module 802, and a networking module 803.

The controlling module 801 is configured to control a power converter to search for multiple initial module controllers.

The first determining module 802 is configured to determine multiple candidate module controllers from the multiple initial module controllers, where the multiple candidate module controllers are obtained by filtering the multiple initial module controllers based on a communication link quality between the power converter and each of the multiple initial module controllers and a minimum quality requirement threshold.

The networking module 803 is configured to network the multiple candidate module controllers to obtain multiple networked module controllers.

In an embodiment, the networking module 803 is further configured to: transmit a frequency switching command to the multiple candidate module controllers in a common frequency band, where the frequency switching command is used to indicate that each of the multiple candidate module controllers is switched to a corresponding target operating frequency band; and network each of the multiple candidate module controllers in the corresponding target operating frequency band to obtain the multiple networked module controllers.

In an embodiment, the networking module 803 is further configured to: perform multiple voltage limiting operations on the multiple candidate module controllers, and determine a temporary networking voltage of the power converter; and network the multiple candidate module controllers at the temporary networking voltage to obtain the multiple networked module controllers.

In an embodiment, the networking module 803 is further configured to: control the power converter to broadcast a first voltage limiting command and acquire voltage data of the power converter for the first time as first-round voltage data, where the first voltage limiting command is used to indicate that operating voltages of the multiple candidate module controllers are set to a first voltage; control the power converter to broadcast a second voltage limiting command and acquire voltage data of the power converter for the second time as second-round voltage data, where the second voltage limiting command is used to indicate that operating voltages of the candidate module controllers are set to a second voltage; and determine the temporary networking voltage of the power converter based on the first-round voltage data and the second-round voltage data.

In an embodiment, the networking module 803 is further configured to: determine a largest number of module controllers corresponding to a longest photovoltaic string in the power converter based on the first-round voltage data and the second-round voltage data, where the longest photovoltaic string refers to a photovoltaic string with the largest number of module controllers among photovoltaic strings connected to DC/DC ports in the power converter; and determine the temporary networking voltage of the power converter based on the largest number of module controllers, the first-round voltage data, and the second-round voltage data.

In an embodiment, the networking module 803 is further configured to: perform a pulling short-circuit operation or an IV scanning operation on the multiple candidate module controllers to determine a Boost port corresponding to each of the multiple candidate module controllers; and network the multiple candidate module controllers based on the Boost port corresponding to each of the candidate module controllers, to obtain the multiple networked module controllers.

In an embodiment, the networking module 803 is further configured to: broadcast, by the power converter, a Boost disturbance strategy command, where the Boost disturbance strategy command is used to indicate a Boost index identifier to be disturbed at each disturbance moment in a disturbance moment sequence; limit a current of the power converter to a first current; perform a pulling short-circuit operation on Boost ports one by one based on multiple Boost index identifiers in the disturbance moment sequence; determine, for each of the multiple candidate module controllers, a voltage change of the candidate module controller and determine the Boost port corresponding to the candidate module controller based on the voltage change; or perform an IV scanning operation on the multiple candidate module controllers, and determine, for each of the multiple candidate module controllers, a voltage change of the candidate module controller and determine the Boost port corresponding to the candidate module controller based on the voltage change.

In an embodiment, the self-networking apparatus for a module controller further includes a second determining module 804, configured to: determine, in response to each Boost port in the power converter being connected to a single photovoltaic string, a PV port corresponding to each of the multiple networked module controllers.

In an embodiment, the self-networking apparatus for a module controller further includes a pulse blocking module 805, a third determining module 806, and a fourth determining module 807.

The pulse blocking module 805 is configured to: perform, in response to at least one Boost port in the power converter being connected to multiple photovoltaic strings, pulse blocking on the power converter to obtain a pulse-blocked power converter.

The third determining module 806 is configured to: determine, in response to a circulating current being in one of the at least one Boost port of the pulse-blocked power converter, that the Boost port with the circulating current is connected to different photovoltaic strings connected in parallel.

The fourth determining module 807 is configured to determine a PV port corresponding to each of the multiple networked module controllers based on a current direction of the networked module controller.

In an embodiment, the self-networking apparatus for a module controller further includes a serial number obtaining module 808, a bypassing module 809, and a fifth determining module 810.

The serial number obtaining module 808 is configured to: obtain, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port.

The bypassing module 809 is configured to bypass the networked module controller indicated by the at least one serial number.

The fifth determining module 810 is configured to determine the PV port corresponding to each of the multiple networked module controllers based on a current direction of the networked module controller.

In an embodiment, the self-networking apparatus for a module controller further includes a serial number obtaining module 808, a bypassing module 809, an identification module 811, and a sixth determining module 812.

The serial number obtaining module 808 is configured to: obtain, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port.

The bypassing module 809 is configured to bypass the networked module controller indicated by the at least one serial number.

The identification module 811 is configured to broadcast, by the power converter, a PV identification command, where the PV identification command is used to indicate a Boost index identifier in which a current is to be changed at each disturbance moment.

The sixth determining module 812 is configured to: change a current of each of the Boost ports one by one based on the Boost index identifier; determine a change of an output current of each of the multiple networked module controllers; and determine the PV port corresponding to the networked module controller based on the change of the output current.

In an embodiment, the bypassing module 809 is further configured to: determine the networked module controller indicated by the at least one serial number as at least one to-be-bypassed module controller; and transmit an activation command to an active bypass switching transistor in each of the at least one to-be-bypassed module controller, to activate the at least one to-be-bypassed module controller to achieve active bypass.

In an embodiment, the bypassing module 809 is further configured to: determine, in response to an unactivated networked module controller being connected between two activated module controllers, that an active bypass switching transistor in the unactivated networked module controller is in a passive bypass state.

In an embodiment, the controlling module 801 is further configured to: control the power converter to broadcast a search command in a common frequency band, where the search command includes a PLC link quality detection command and a PLC link quality minimum threshold.

The first determining module 802 is further configured to: receive, by the power converter, broadcast response messages fed back by the multiple candidate module controllers to obtain the multiple candidate module controllers and multiple uplink PLC link quality values, where the uplink PLC link quality value refers to the PLC link quality value from the module controllers to the power converter; the multiple candidate module controllers refer to initial module controllers, among the multiple initial module controllers, whose detected downlink PLC link quality values each are greater than or equal to the PLC link quality minimum threshold; and the downlink PLC link quality value refers to the PLC link quality value from the power converter to the module controllers.

In an embodiment, the controlling module 801 is further configured to: control the power converter to broadcast a search command in a common frequency band, where the search command includes a PLC link quality detection command.

The first determining module 802 is further configured to: receive, by the power converter, broadcast response messages fed back by the multiple initial module controllers to obtain multiple uplink PLC link quality values, where the uplink PLC link quality value refers to the PLC link quality value from the module controllers to the power converter; and determine initial module controllers, among the multiple initial module controllers, whose uplink PLC link quality values each are greater than or equal to a PLC link quality minimum threshold as the multiple candidate module controllers.

In an embodiment, the controlling module 801 is further configured to: control the power converter to broadcast a search command in a common frequency band, where the search command includes a PLC link quality detection command and a PLC link quality minimum threshold.

The first determining module 802 is further configured to: receive, by the power converter, broadcast response messages fed back by multiple filtered module controllers to obtain the multiple filtered module controllers and multiple uplink PLC link quality values, where the multiple filtered module controllers refer to initial module controllers, among the multiple initial module controllers, whose detected downlink PLC link quality values are greater than or equal to the PLC link quality minimum threshold, the uplink PLC link quality value refers to the PLC link quality value from the module controllers to the power converter, and the downlink PLC link quality value refers to the PLC link quality value from the power converter to the module controllers; and determine filtered module controllers, among the multiple filtered module controllers, whose uplink PLC link quality values each are greater than or equal to the PLC link quality minimum threshold as the multiple candidate module controllers.

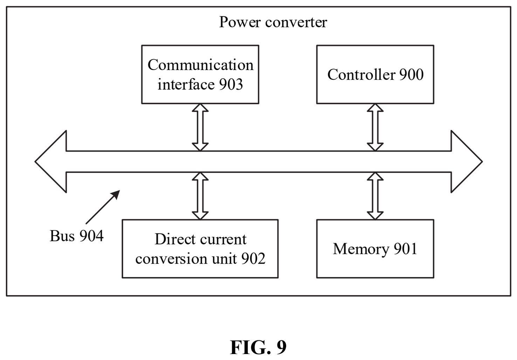

Referring to FIG. 9, the power converter includes a controller 900, a memory 901, and a direct current conversion unit 902. The direct current conversion unit 902 is configured to convert a direct current power into an alternating current power. The memory 901 stores a machine-executable instruction that is executable by the controller 900. The controller 900 is configured to perform the following steps:
searching for multiple initial module controllers;
determining multiple candidate module controllers from the multiple initial module controllers, where the multiple candidate module controllers are obtained by filtering the multiple initial module controllers based on a communication link quality between the power converter and each of the multiple initial module controllers and a minimum quality requirement threshold; and
networking the multiple candidate module controllers to obtain multiple networked module controllers.

In an embodiment, the networking the multiple candidate module controllers to obtain multiple networked module controllers includes:
transmitting a frequency switching command to the multiple candidate module controllers in a common frequency band, where the frequency switching command is used to indicate that each of the multiple candidate module controllers is switched to a corresponding target operating frequency band; and
networking each of the multiple candidate module controllers in the corresponding target operating frequency band to obtain the multiple networked module controllers.

In an embodiment, the networking the multiple candidate module controllers to obtain multiple networked module controllers includes:
performing multiple voltage limiting operations on the multiple candidate module controllers, and determining a temporary networking voltage of the power converter; and
networking the multiple candidate module controllers at the temporary networking voltage to obtain the multiple networked module controllers.

In an embodiment, the performing multiple voltage limiting operations on the multiple candidate module controllers, and determining a temporary networking voltage of the power converter includes:
controlling the power converter to broadcast a first voltage limiting command and acquiring voltage data of the power converter for the first time as first-round voltage data, where the first voltage limiting command is used to indicate that operating voltages of the multiple candidate module controllers are set to a first voltage;
controlling the power converter to broadcast a second voltage limiting command and acquiring voltage data of the power converter for the second time as second-round voltage data, where the second voltage limiting command is used to indicate that operating voltages of the multiple candidate module controllers are set to a second voltage; and
determining the temporary networking voltage of the power converter based on the first-round voltage data and the second-round voltage data.

In an embodiment, the determining the temporary networking voltage of the power converter based on the first-round voltage data and the second-round voltage data includes:
determining a largest number of module controllers corresponding to a longest photovoltaic string in the power converter based on the first-round voltage data and the second-round voltage data, where the longest photovoltaic string refers to a photovoltaic string with the largest number of module controllers among photovoltaic strings connected to DC/DC ports in the power converter; and
determining the temporary networking voltage of the power converter based on the largest number of module controllers, the first-round voltage data, and the second-round voltage data.

In an embodiment, the networking the multiple candidate module controllers to obtain multiple networked module controllers includes:
performing a pulling short-circuit operation or an IV scanning operation on the multiple candidate module controllers to determine a Boost port corresponding to each of the multiple candidate module controllers; and
networking the multiple candidate module controllers based on the Boost port corresponding to each of the candidate module controllers, to obtain the multiple networked module controllers.

In an embodiment, the performing a pulling short-circuit operation or an IV scanning operation on the multiple candidate module controllers to determine a Boost port corresponding to each of the multiple candidate module controllers includes:
broadcasting, by the power converter, a Boost disturbance strategy command, where the Boost disturbance strategy command is used to indicate a Boost index identifier to be disturbed at each disturbance moment in a disturbance moment sequence;
limiting a current of the power converter to a first current; performing a pulling short-circuit operation on Boost ports one by one based on multiple Boost index identifiers in the disturbance moment sequence; determining, for each of the multiple candidate module controllers, a voltage change of the candidate module controller and determining the Boost port corresponding to the candidate module controller based on the voltage change; or
performing an IV scanning operation on the multiple candidate module controllers, and determining, for each of the multiple candidate module controllers, a voltage change of the candidate module controller and determining the Boost port corresponding to the candidate module controller based on the voltage change.

In an embodiment, the networking the multiple candidate module controllers to obtain multiple networked module controllers further includes:
determining, in response to each Boost port in the power converter being connected to a single photovoltaic string, a PV port corresponding to each of the multiple networked module controllers.

In an embodiment, the networking the multiple candidate module controllers to obtain multiple networked module controllers further includes:
performing, in response to at least one Boost port in the power converter being connected to multiple photovoltaic strings, pulse blocking on the power converter to obtain a pulse-blocked power converter;
determining, in response to a circulating current being in one of the at least one Boost port of the pulse-blocked power converter, that the Boost port with the circulating current is connected to different photovoltaic strings connected in parallel; and
determining a PV port corresponding to each of the multiple networked module controllers based on a current direction of the networked module controller.

In an embodiment, the networking the multiple candidate module controllers to obtain multiple networked module controllers further includes:
obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port;
bypassing the networked module controller indicated by the at least one serial number; and
determining the PV port corresponding to each of the multiple networked module controllers based on a current direction of the networked module controller.

In an embodiment, the networking the multiple candidate module controllers to obtain multiple networked module controllers further includes:
obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port;
bypassing the networked module controller indicated by the at least one serial number;
broadcasting, by the power converter, a PV identification command, where the PV identification command is used to indicate a Boost index identifier in which a current is to be changed at each disturbance moment;
changing a current of each of the Boost ports one by one based on the Boost index identifier;
determining a change of an output current of each of the multiple networked module controllers; and
determining the PV port corresponding to the networked module controller based on the change of the output current.

In an embodiment, the bypassing the networked module controller indicated by the at least one serial number includes:
determining the networked module controller indicated by the at least one serial number as at least one to-be-bypassed module controller; and
transmitting an activation command to an active bypass switching transistor in each of the at least one to-be-bypassed module controller, to activate the at least one to-be-bypassed module controller to achieve active bypass.

In an embodiment, after transmitting an activation command to an active bypass switching transistor in each of the at least one to-be-bypassed module controller, the controller is further configured to: determine, in response to an unactivated networked module controller being connected between two activated module controllers, that an active bypass switching transistor in the unactivated networked module controller is in a passive bypass state.

In an embodiment, the controlling a power converter to search for multiple initial module controllers includes:
controlling the power converter to broadcast a search command in a common frequency band, where the search command includes a PLC link quality detection command and a PLC link quality minimum threshold;
where the determining multiple candidate module controllers from the multiple initial module controllers includes:
   receiving, by the power converter, broadcast response messages fed back by the multiple candidate module controllers to obtain the multiple candidate module controllers and multiple uplink PLC link quality values, where the uplink PLC link quality value refers to the PLC link quality value from the module controllers to the power converter; the multiple candidate module controllers refer to initial module controllers, among the multiple initial module controllers, whose detected downlink PLC link quality values each are greater than or equal to the PLC link quality minimum threshold; and the downlink PLC link quality value refers to the PLC link quality value from the power converter to the module controllers.

In an embodiment, the controlling a power converter to search for multiple initial module controllers includes: controlling the power converter to broadcast a search command in a common frequency band, where the search command includes a PLC link quality detection command,
where the determining multiple candidate module controllers from the multiple initial module controllers includes:
receiving, by the power converter, broadcast response messages fed back by the multiple initial module controllers to obtain multiple uplink PLC link quality values, where the uplink PLC link quality value refers to the PLC link quality value from the module controllers to the power converter; and
determining initial module controllers, among the multiple initial module controllers, whose uplink PLC link quality values each are greater than or equal to a PLC link quality minimum threshold as the multiple candidate module controllers.

In an embodiment, the controlling a power converter to search for multiple initial module controllers includes: controlling the power converter to broadcast a search command in a common frequency band, where the search command includes a PLC link quality detection command and a PLC link quality minimum threshold;
where the determining multiple candidate module controllers from the multiple initial module controllers includes:
receiving, by the power converter, broadcast response messages fed back by multiple filtered module controllers to obtain the multiple filtered module controllers and multiple uplink PLC link quality values, where the multiple filtered module controllers refer to initial module controllers, among the multiple initial module controllers, whose detected downlink PLC link quality values are greater than or equal to the PLC link quality minimum threshold, the uplink PLC link quality value refers to the PLC link quality value from the module controllers to the power converter, and the downlink PLC link quality value refers to the PLC link quality value from the power converter to the module controllers; and
determining filtered module controllers, among the multiple filtered module controllers, whose uplink PLC link quality values each are greater than or equal to the PLC link quality minimum threshold as the multiple candidate module controllers.

Furthermore, the power converter shown in FIG. 9 further includes a communication interface 903 and a bus 904. The controller 900, the memory 901, the direct current conversion unit 902, and the communication interface 903 are connected to each other via the bus 904.

The memory 901 may include a high-speed random access memory (RAM) or a non-volatile memory, such as at least one disk memory. The network element of the system communicates with at least one other network element through at least one communication interface 903 (which may be wired or wireless). Internet, wide area network, local network, metropolitan area network and the like may be used. The bus 904 may be an ISA bus, PCI bus, EISA bus or the like. The bus may include an address bus, a data bus, a control bus and the like. For ease of representation, only one bidirectional arrow is shown in FIG. 9 to represent the bus, which does not imply that there is only one bus or one type of bus.

The controller 900 may be an integrated circuit chip with signal processing capabilities. During an implementation, the steps of the method may be performed by using an integrated logic circuit of hardware in the controller 900 or instructions in a software form. The controller 900 may be a general processor such as a central processing unit (CPU), a network processor (NP), a digital signal processor (DSP), an application specific integrated circuit (ASIC), a field-programmable gate array (FPGA) or other programmable logic devices, a discrete gate, a transistor logic device, or a discrete hardware component. The methods, steps and logical block diagrams disclosed in the embodiments of the present disclosure may be implemented or performed. The general processor may be a microprocessor, a conventional processor, or the like. Steps of the method disclosed in combination with the embodiments of the present disclosure may be directly implemented by a hardware decoding processor or implemented by a combination of a hardware module and a software module in the decoding processor. The software module may be in a mature storage medium in the art such as a random access memory, a flash memory, a read-only memory, a programmable read-only memory or an electrically erasable programmable memory, or a register. The storage medium is located in the memory 901, and the controller 900 reads the information in the memory 901 and, in combination with its hardware, performs the steps of the method of the embodiments.

A power system is provided according to an embodiment of the present disclosure. The power system includes multiple module controllers and at least one power converter. Each power converter is connected to at least one photovoltaic string, and each photovoltaic string includes multiple photovoltaic units connected in series. Each of the photovoltaic units includes a photovoltaic module and a module controller connected in series. The photovoltaic module is configured to perform photovoltaic power generation and transmit, through a corresponding module controller, electrical energy to the power converter to which the photovoltaic unit is connected. The power converter is configured to perform the self-networking method for a module controller according to any one of the embodiments.

A computer-readable storage medium is provided according to an embodiment of the present disclosure. The computer-readable storage medium may be a non-volatile computer-readable storage medium or a volatile computer-readable storage medium. The computer-readable storage medium stores an instruction. The instruction, when executed by a computer, causes the computer to perform the self-networking method for a module controller.

The self-networking method includes: controlling a power converter to search for multiple initial module controllers; determining multiple candidate module controllers from the multiple initial module controllers, where the multiple candidate module controllers are obtained by filtering the multiple initial module controllers based on a communication link quality between the power converter and each of the multiple initial module controllers and a minimum quality requirement threshold; and networking the multiple candidate module controllers to obtain multiple networked module controllers.

The networking the multiple candidate module controllers to obtain multiple networked module controllers includes:
transmitting a frequency switching command to the multiple candidate module controllers in a common frequency band, where the frequency switching command is used to indicate that each of the multiple candidate module controllers is switched to a corresponding target operating frequency band; and
networking each of the multiple candidate module controllers in the corresponding target operating frequency band to obtain the multiple networked module controllers.

The networking the multiple candidate module controllers to obtain multiple networked module controllers includes:
performing multiple voltage limiting operations on the multiple candidate module controllers, and determining a temporary networking voltage of the power converter; and
networking the multiple candidate module controllers at the temporary networking voltage to obtain the multiple networked module controllers.

The performing multiple voltage limiting operations on the multiple candidate module controllers, and determining a temporary networking voltage of the power converter includes:
controlling the power converter to broadcast a first voltage limiting command and acquiring voltage data of the power converter for the first time as first-round voltage data, where the first voltage limiting command is used to indicate that operating voltages of the multiple candidate module controllers are set to a first voltage;
controlling the power converter to broadcast a second voltage limiting command and acquiring voltage data of the power converter for the second time as second-round voltage data, where the second voltage limiting command is used to indicate that operating voltages of the multiple candidate module controllers are set to a second voltage; and
determining the temporary networking voltage of the power converter based on the first-round voltage data and the second-round voltage data.

The determining the temporary networking voltage of the power converter based on the first-round voltage data and the second-round voltage data includes:
determining a largest number of module controllers corresponding to a longest photovoltaic string in the power converter based on the first-round voltage data and the second-round voltage data, where the longest photovoltaic string refers to a photovoltaic string with the largest number of module controllers among photovoltaic strings connected to DC/DC ports in the power converter; and
determining the temporary networking voltage of the power converter based on the largest number of module controllers, the first-round voltage data, and the second-round voltage data.

The networking the multiple candidate module controllers to obtain multiple networked module controllers includes:
performing a pulling short-circuit operation or an IV scanning operation on the multiple candidate module controllers to determine a Boost port corresponding to each of the multiple candidate module controllers; and
networking the multiple candidate module controllers based on the Boost port corresponding to each of the candidate module controllers, to obtain the multiple networked module controllers.

The performing a pulling short-circuit operation or an IV scanning operation on the multiple candidate module controllers to determine a Boost port corresponding to each of the multiple candidate module controllers includes:
broadcasting, by the power converter, a Boost disturbance strategy command, where the Boost disturbance strategy command is used to indicate a Boost index identifier to be disturbed at each disturbance moment in a disturbance moment sequence;
limiting a current of the power converter to a first current; performing a pulling short-circuit operation on Boost ports one by one based on multiple Boost index identifiers in the disturbance moment sequence; determining, for each of the multiple candidate module controllers, a voltage change of the candidate module controller and determining the Boost port corresponding to the candidate module controller based on the voltage change; or
performing an IV scanning operation on the multiple candidate module controllers, and determining, for each of the multiple candidate module controllers, a voltage change of the candidate module controller and determining the Boost port corresponding to the candidate module controller based on the voltage change.

The networking the multiple candidate module controllers to obtain multiple networked module controllers further includes: determining, in response to each Boost port in the power converter being connected to a single photovoltaic string, a PV port corresponding to each of the multiple networked module controllers.

The networking the multiple candidate module controllers to obtain multiple networked module controllers further includes:
performing, in response to at least one Boost port in the power converter being connected to multiple photovoltaic strings, pulse blocking on the power converter to obtain a pulse-blocked power converter;
determining, in response to a circulating current being in one of the at least one Boost port of the pulse-blocked power converter, that the Boost port with the circulating current is connected to different photovoltaic strings connected in parallel; and
determining a PV port corresponding to each of the multiple networked module controllers based on a current direction of the networked module controller.

The networking the multiple candidate module controllers to obtain multiple networked module controllers further includes:
obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port;
bypassing the networked module controller indicated by the at least one serial number; and
determining the PV port corresponding to each of the multiple networked module controllers based on a current direction of the networked module controller.

The networking the multiple candidate module controllers to obtain multiple networked module controllers further includes:
obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port;
bypassing the networked module controller indicated by the at least one serial number;
broadcasting, by the power converter, a PV identification command, where the PV identification command is used to indicate a Boost index identifier in which a current is to be changed at each disturbance moment;
changing a current of each of the Boost ports one by one based on the Boost index identifier;
determining a change of an output current of each of the multiple networked module controllers; and
determining the PV port corresponding to the networked module controller based on the change of the output current.

The bypassing the networked module controller indicated by the at least one serial number includes:
determining the networked module controller indicated by the at least one serial number as at least one to-be-bypassed module controller; and
transmitting an activation command to an active bypass switching transistor in each of the at least one to-be-bypassed module controller, to activate the at least one to-be-bypassed module controller to achieve active bypass.

After transmitting an activation command to an active bypass switching transistor in each of the at least one to-be-bypassed module controller, the method further includes: determining, in response to an unactivated networked module controller being connected between two activated module controllers, that an active bypass switching transistor in the unactivated networked module controller is in a passive bypass state.

The controlling a power converter to search for multiple initial module controllers includes:
controlling the power converter to broadcast a search command in a common frequency band, where the search command includes a PLC link quality detection command and a PLC link quality minimum threshold;
where the determining multiple candidate module controllers from the multiple initial module controllers includes:
   receiving, by the power converter, broadcast response messages fed back by the multiple candidate module controllers to obtain the multiple candidate module controllers and multiple uplink PLC link quality values, where the uplink PLC link quality value refers to the PLC link quality value from the module controllers to the power converter; the multiple candidate module controllers refer to initial module controllers, among the multiple initial module controllers, whose detected downlink PLC link quality values each are greater than or equal to the PLC link quality minimum threshold; and the downlink PLC link quality value refers to the PLC link quality value from the power converter to the module controllers.

The controlling a power converter to search for multiple initial module controllers includes:
controlling the power converter to broadcast a search command in a common frequency band, where the search command includes a PLC link quality detection command;
where the determining multiple candidate module controllers from the multiple initial module controllers includes:
   receiving, by the power converter, broadcast response messages fed back by the multiple initial module controllers to obtain multiple uplink PLC link quality values, where the uplink PLC link quality value refers to the PLC link quality value from the module controllers to the power converter; and
   determining initial module controllers, among the multiple initial module controllers, whose uplink PLC link quality values each are greater than or equal to a PLC link quality minimum threshold as the multiple candidate module controllers.

The controlling a power converter to search for multiple initial module controllers includes:
controlling the power converter to broadcast a search command in a common frequency band, where the search command includes a PLC link quality detection command and a PLC link quality minimum threshold;
where the determining multiple candidate module controllers from the multiple initial module controllers includes:
   receiving, by the power converter, broadcast response messages fed back by multiple filtered module controllers to obtain the multiple filtered module controllers and multiple uplink PLC link quality values, where the multiple filtered module controllers refer to initial module controllers, among the multiple initial module controllers, whose detected downlink PLC link quality values are greater than or equal to the PLC link quality minimum threshold, the uplink PLC link quality value refers to the PLC link quality value from the module controllers to the power converter, and the downlink PLC link quality value refers to the PLC link quality value from the power converter to the module controllers; and
   determining filtered module controllers, among the multiple filtered module controllers, whose uplink PLC link quality values each are greater than or equal to the PLC link quality minimum threshold as the multiple candidate module controllers.

Those skilled in the art may clearly understand that, for convenience and brevity of description, for a detailed operation process of the foregoing system, apparatus and unit, reference may be made to a corresponding process in the foregoing embodiments of the method, which is not repeated herein.

In a case that the functions are implemented in a form of a software functional unit and sold or used as an independent product, the functions may be stored in a computer-readable storage medium. Based on such understanding, part of the technical solutions of the embodiments of the present disclosure which are essential or contribute to the conventional technology, or part of the technical solutions may be embodied in a form of a software product. The computer software product is stored in a storage medium and includes several instructions for causing a computer device (such as a personal computer, a server, or a network device) to perform all or part of the method described in the embodiments of the present disclosure. The storage medium described above includes various media capable of storing program codes, such as a USB flash disk, a movable hard disk, a Read Only Memory (ROM), a Random Access Memory (RAM), a magnetic disc or an optical disc.

In the description of the present disclosure, it should be noted that the terms "first", "second" and "third" are only for illustrative purposes, and cannot be understood as indicating or implying relative importance.

Finally, it should be noted that the above embodiments are only specific embodiments of the present disclosure, and are used to illustrate the technical solutions of the present disclosure, rather than to limit the present disclosure. The protection scope of the present disclosure is not limited thereto. Although the present disclosure is described in detail with reference to the foregoing embodiments, those skilled in the art should understand that those familiar with the technical field can make modifications or easily envisage changes to the technical solutions recorded in the foregoing embodiments within the technical scope disclosed in the present disclosure, or can obtain equivalent substitutions of some of the technical features. Such modifications, changes or substitutions do not deviate from the essence of the corresponding technical solutions from the spirit and scope of the technical solutions in the embodiments of the present disclosure, and shall be covered by the protection scope of the present disclosure. Therefore, the protection scope of the present disclosure shall be in accordance with the protection scope of the claims.

## Claims

1. A self-networking method for a module controller, comprising:
controlling a power converter to search for a plurality of initial module controllers;
determining a plurality of candidate module controllers from the plurality of initial module controllers, wherein the plurality of candidate module controllers are obtained by filtering the plurality of initial module controllers based on a communication link quality between the power converter and each of the plurality of initial module controllers and a minimum quality requirement threshold; and
networking the plurality of candidate module controllers to obtain a plurality of networked module controllers.

2. The self-networking method for a module controller according to claim 1, wherein the networking the plurality of candidate module controllers to obtain a plurality of networked module controllers comprises:
transmitting a frequency switching command to the plurality of candidate module controllers in a common frequency band, wherein the frequency switching command is used to indicate that each of the plurality of candidate module controllers is switched to a corresponding target operating frequency band; and
networking each of the plurality of candidate module controllers in the corresponding target operating frequency band to obtain the plurality of networked module controllers.

3. The self-networking method for a module controller according to claim 1, wherein the networking the plurality of candidate module controllers to obtain a plurality of networked module controllers comprises:
performing a plurality of voltage limiting operations on the plurality of candidate module controllers, and determining a temporary networking voltage of the power converter; and networking the plurality of candidate module controllers at the temporary networking voltage to obtain the plurality of networked module controllers,
wherein the performing a plurality of voltage limiting operations on the plurality of candidate module controllers, and determining a temporary networking voltage of the power converter comprises:
controlling the power converter to broadcast a first voltage limiting command and acquiring voltage data of the power converter for the first time as first-round voltage data, wherein the first voltage limiting command is used to indicate that operating voltages of the plurality of candidate module controllers are set to a first voltage;
controlling the power converter to broadcast a second voltage limiting command and acquiring voltage data of the power converter for the second time as second-round voltage data, wherein the second voltage limiting command is used to indicate that operating voltages of the plurality of candidate module controllers are set to a second voltage; and
determining the temporary networking voltage of the power converter based on the first-round voltage data and the second-round voltage data,
wherein the determining the temporary networking voltage of the power converter based on the first-round voltage data and the second-round voltage data comprises:
determining a largest number of module controllers corresponding to a longest photovoltaic string in the power converter based on the first-round voltage data and the second-round voltage data, wherein the longest photovoltaic string refers to a photovoltaic string with the largest number of module controllers among photovoltaic strings connected to direct current/direct current (DC/DC) ports in the power converter; and
determining the temporary networking voltage of the power converter based on the largest number of module controllers, the first-round voltage data, and the second-round voltage data.

4. The self-networking method for a module controller according to claim 1, wherein the networking the plurality of candidate module controllers to obtain a plurality of networked module controllers comprises:
identifying the plurality of candidate module controllers by a pulling short-circuit operation or an IV scanning operation to determine a Boost port corresponding to each of the plurality of candidate module controllers;
networking the plurality of candidate module controllers based on the Boost port corresponding to each of the plurality of candidate module controllers, to obtain the plurality of networked module controllers;
wherein the identifying the plurality of candidate module controllers by the pulling short-circuit operation or the IV scanning operation to determine a Boost port corresponding to each of the plurality of candidate module controllers comprises:
broadcasting, by the power converter, a Boost disturbance strategy command, wherein the Boost disturbance strategy command is used to indicate a Boost index identifier to be disturbed at each disturbance moment in a disturbance moment sequence; and
limiting a current of the power converter to a first current; short-circuiting Boost ports one by one based on a plurality of Boost index identifiers in the disturbance moment sequence; determining, for each of the plurality of candidate module controllers, a voltage change of the candidate module controller and determining the Boost port corresponding to the candidate module controller based on the voltage change; or
performing an IV scanning operation on the plurality of candidate module controllers; and determining, for each of the plurality of candidate module controllers, a voltage change of the candidate module controller and determining the Boost port corresponding to the candidate module controller based on the voltage change.

5. The self-networking method for a module controller according to claim 1, wherein the networking the plurality of candidate module controllers to obtain a plurality of networked module controllers comprises:
determining, in response to each Boost port in the power converter being connected to a single photovoltaic string, a photovoltaic string (PV) port corresponding to each of the plurality of networked module controllers.

6. The self-networking method for a module controller according to claim 1, wherein the networking the plurality of candidate module controllers to obtain a plurality of networked module controllers comprises:
performing, in response to at least one Boost port in the power converter being connected to a plurality of photovoltaic strings, pulse blocking on the power converter to obtain a pulse-blocked power converter; determining, in response to a circulating current being in one of the at least one Boost port of the pulse-blocked power converter, that the Boost port with the circulating current is connected to different photovoltaic strings connected in parallel; and determining a photovoltaic string (PV) port corresponding to each of the plurality of networked module controllers based on a current direction of the networked module controller;
obtaining, in response to no circulating current being in Boost ports of the pulse-blocked power converter, at least one serial number corresponding to one of the Boost ports, wherein the at least one serial number is used to indicate a networked module controller to be bypassed in a photovoltaic string connected to the Boost port; bypassing the networked module controller indicated by the at least one serial number; and determining the PV port corresponding to each of the plurality of networked module controllers based on a current direction of the networked module controller; or
obtaining, in response to no circulating current being in Boost ports of the pulse-blocked power converter, at least one serial number corresponding to one of the Boost ports, wherein the at least one serial number is used to indicate a networked module controller to be bypassed in a photovoltaic string connected to the Boost port; bypassing the networked module controller indicated by the at least one serial number; broadcasting, by the power converter, a PV identification command, wherein the PV identification command is used to indicate a Boost index identifier in which a current is to be changed at each disturbance moment; changing a current of each of the Boost ports one by one based on the Boost index identifier; determining a change of an output current of each of the plurality of networked module controllers; and determining the PV port corresponding to the networked module controller based on the change of the output current.

7. The self-networking method for a module controller according to claim 1, wherein the controlling a power converter to search for a plurality of initial module controllers comprises:
controlling the power converter to broadcast a search command in a common frequency band, wherein the search command comprises a power line carrier (PLC) link quality detection command and a PLC link quality minimum threshold; wherein the determining a plurality of candidate module controllers from the plurality of initial module controllers comprises: receiving, by the power converter, broadcast response messages fed back by the plurality of candidate module controllers to obtain the plurality of candidate module controllers and a plurality of uplink PLC link quality values, wherein the uplink PLC link quality value refers to the PLC link quality value from the module controllers to the power converter; the candidate module controllers refer to initial module controllers, among the plurality of initial module controllers, whose detected downlink PLC link quality values each are greater than or equal to the PLC link quality minimum threshold; and the downlink PLC link quality value refers to the PLC link quality value from the power converter to the module controllers; or
controlling the power converter to broadcast a search command in a common frequency band, wherein the search command comprises a power line carrier (PLC) link quality detection command; wherein the determining a plurality of candidate module controllers from the plurality of initial module controllers comprises: receiving, by the power converter, broadcast response messages fed back by the plurality of initial module controllers to obtain a plurality of uplink PLC link quality values, wherein the uplink PLC link quality value refers to the PLC link quality value from the module controllers to the power converter; and determining initial module controllers, among the plurality of initial module controllers, whose uplink PLC link quality values each are greater than or equal to a PLC link quality minimum threshold as the plurality of candidate module controllers; or
controlling the power converter to broadcast a search command in a common frequency band, wherein the search command comprises a power line carrier (PLC) link quality detection command and a PLC link quality minimum threshold; wherein the determining a plurality of candidate module controllers from the plurality of initial module controllers comprises: receiving, by the power converter, broadcast response messages fed back by a plurality of filtered module controllers to obtain the plurality of filtered module controllers and a plurality of uplink PLC link quality values, wherein the filtered module controllers refer to initial module controllers, among the plurality of initial module controllers, whose detected downlink PLC link quality values are greater than or equal to the PLC link quality minimum threshold, the uplink PLC link quality value refers to the PLC link quality value from the module controllers to the power converter, and the downlink PLC link quality value refers to the PLC link quality value from the power converter to the module controller; and determining filtered module controllers, among the plurality of filtered module controllers, whose uplink PLC link quality values each are greater than or equal to the PLC link quality minimum threshold as the plurality of candidate module controllers.

8. A power converter, comprising:
a direct current conversion unit, configured to convert a direct current power into an alternating current power;
a memory, configured to store an instruction;
a controller, configured to
search for a plurality of initial module controllers;
determine a plurality of candidate module controllers from the plurality of initial module controllers, wherein the plurality of candidate module controllers are obtained by filtering the plurality of initial module controllers based on a communication link quality between the power converter and each of the plurality of initial module controllers and a minimum quality requirement threshold; and
network the plurality of candidate module controllers to obtain a plurality of networked module controllers; and
wherein the memory and the controller are connected to each other via lines.

9. The power converter according to claim 8, wherein for networking the plurality of candidate module controllers to obtain a plurality of networked module controllers, the controller is configured to:
transmit a frequency switching command to the plurality of candidate module controllers in a common frequency band, wherein the frequency switching command is used to indicate that each of the plurality of candidate module controllers is switched to a corresponding target operating frequency band; and
network each of the plurality of candidate module controllers in the corresponding target operating frequency band to obtain the plurality of networked module controllers.

10. The power converter according to claim 8, wherein for networking the plurality of candidate module controllers to obtain a plurality of networked module controllers, the controller is configured to:
perform a plurality of voltage limiting operations on the plurality of candidate module controllers, and determine a temporary networking voltage of the power converter; and
network the plurality of candidate module controllers at the temporary networking voltage to obtain the plurality of networked module controllers,
control the power converter to broadcast a first voltage limiting command and acquire voltage data of the power converter for the first time as first-round voltage data, wherein the first voltage limiting command is used to indicate that operating voltages of the plurality of candidate module controllers are set to a first voltage;
control the power converter to broadcast a second voltage limiting command and acquire voltage data of the power converter for the second time as second-round voltage data, wherein the second voltage limiting command is used to indicate that operating voltages of the plurality of candidate module controllers are set to a second voltage; and
determine the temporary networking voltage of the power converter based on the first-round voltage data and the second-round voltage data;
determine a largest number of module controllers corresponding to a longest photovoltaic string in the power converter based on the first-round voltage data and the second-round voltage data, wherein the longest photovoltaic string refers to a photovoltaic string with the largest number of module controllers among photovoltaic strings connected to direct current/direct current (DC/DC) ports in the power converter; and
determine the temporary networking voltage of the power converter based on the largest number of module controllers, the first-round voltage data, and the second-round voltage data.

11. The power converter according to claim 8, wherein for networking the plurality of candidate module controllers to obtain a plurality of networked module controllers, the controller is configured to:
identify the plurality of candidate module controllers by a pulling short-circuit operation or an IV scanning operation to determine a Boost port corresponding to each of the plurality of candidate module controllers; and
network the plurality of candidate module controllers based on the Boost port corresponding to each of the plurality of candidate module controllers, to obtain the plurality of networked module controllers;
broadcast, by the power converter, a Boost disturbance strategy command, wherein the Boost disturbance strategy command is used to indicate a Boost index identifier to be disturbed at each disturbance moment in a disturbance moment sequence;
limit a current of the power converter to a first current and short-circuit Boost ports one by one based on a plurality of Boost index identifiers in the disturbance moment sequence; determine, for each of the plurality of candidate module controllers, a voltage change of the candidate module controller and determine the Boost port corresponding to the candidate module controller based on the voltage change; or
perform an IV scanning operation on the plurality of candidate module controllers; and determine, for each of the plurality of candidate module controllers, a voltage change of the candidate module controller and determine the Boost port corresponding to the candidate module controllers based on the voltage change.

12. The power converter according to claim 8, wherein for networking the plurality of candidate module controllers to obtain a plurality of networked module controllers, the controller is configured to:
determine, in response to each Boost port in the power converter being connected to a single photovoltaic string, a photovoltaic string (PV) port corresponding to each of the plurality of networked module controllers.

13. The power converter according to claim 8, wherein for networking the plurality of candidate module controllers to obtain a plurality of networked module controllers, the controller is configured to:
perform, in response to at least one Boost port in the power converter being connected to a plurality of photovoltaic strings, pulse blocking on the power converter to obtain a pulse-blocked power converter;
determine, in response to a circulating current being in one of the at least one Boost port of the pulse-blocked power converter, that the Boost port with the circulating current is connected to different photovoltaic strings connected in parallel; and
determine a photovoltaic string (PV) port corresponding to each of the plurality of networked module controllers based on a current direction of the networked module controller.

14. The power converter according to claim 13, wherein the networking the plurality of candidate module controllers to obtain a plurality of networked module controllers, the controller is configured to:
obtain, in response to no circulating current being in Boost ports of the pulse-blocked power converter, at least one serial number corresponding to one of the Boost ports, wherein the at least one serial number is used to indicate a networked module controller to be bypassed in a photovoltaic string connected to the Boost port; bypass the networked module controller indicated by the at least one serial number; and determine the PV port corresponding to each of the plurality of networked module controllers based on a current direction of each networked module controller; or
obtain, in response to no circulating current being in Boost ports of the pulse-blocked power converter, at least one serial number corresponding to one of the Boost ports, wherein the at least one serial number is used to indicate a networked module controller to be bypassed in a photovoltaic string connected to the Boost port; bypass the networked module controller indicated by the at least one serial number; broadcast, by the power converter, a PV identification command, wherein the PV identification command is used to indicate a Boost index identifier in which a current is to be changed at each disturbance moment; and change a current of each of the Boost ports one by one based on the Boost index identifier; determine a change of an output current of each of the plurality of networked module controllers; and determine the PV port corresponding to the networked module controller based on the change of the output current,
wherein for bypassing the networked module controller indicated by the at least one serial number, the controller is configured to:
determine the networked module controller indicated by the at least one serial number as at least one to-be-bypassed module controller; and
transmit an activation command to an active bypass switching transistor in each of the at least one to-be-bypassed module controller, to activate the at least one to-be-bypassed module controller to achieve active bypass, wherein after transmitting an activation command to an active bypass switching transistor in each of the at least one to-be-bypassed module controller, the controller is further configured to:
determine, in response to an unactivated networked module controller being connected between two activated module controllers, that an active bypass switching transistor in the unactivated networked module controller is in a passive bypass state.

15. The power converter according to claim 8, wherein for determining a plurality of candidate module controllers from the plurality of initial module controllers, the controller is configured to:
control the power converter to broadcast a search command in a common frequency band, wherein the search command comprises a power line carrier (PLC) link quality detection command and a PLC link quality minimum threshold; and receive, by the power converter, broadcast response messages fed back by the plurality of candidate module controllers to obtain the plurality of candidate module controllers and a plurality of uplink PLC link quality values, wherein the uplink PLC link quality value refers to the PLC link quality value from the module controllers to the power converter; the candidate module controllers refer to initial module controllers, among the plurality of initial module controllers, whose detected downlink PLC link quality values each are greater than or equal to the PLC link quality minimum threshold; and the downlink PLC link quality value refers to the PLC link quality value from the power converter to the module controllers; or
control the power converter to broadcast a search command in a common frequency band, wherein the search command comprises a power line carrier (PLC) link quality detection command; receive, by the power converter, broadcast response messages fed back by the plurality of initial module controllers to obtain a plurality of uplink PLC link quality values, wherein the uplink PLC link quality value refers to the PLC link quality value from the module controllers to the power converter; and determine initial module controllers, among the plurality of initial module controllers, whose uplink PLC link quality values each are greater than or equal to a PLC link quality minimum threshold as the plurality of candidate module controllers; or
control the power converter to broadcast a search command in a common frequency band, wherein the search command comprises a power line carrier (PLC) link quality detection command and a PLC link quality minimum threshold; receive, by the power converter, broadcast response messages fed back by a plurality of filtered module controllers to obtain the plurality of filtered module controllers and a plurality of uplink PLC link quality values, wherein the filtered module controllers refer to initial module controllers, among the plurality of initial module controllers, whose detected downlink PLC link quality values are greater than or equal to the PLC link quality minimum threshold, the uplink PLC link quality value refers to the PLC link quality value from the module controllers to the power converter, and the downlink PLC link quality value refers to the PLC link quality value from the power converter to the module controllers; and determine filtered module controllers, among the plurality of filtered module controllers, whose uplink PLC link quality values each are greater than or equal to the PLC link quality minimum threshold as the plurality of candidate module controllers.
